# EUROPEAN PATENT APPLICATION

(11) **EP 4 064 532 A1**
(43) Date of publication of application: **28.09.2022**
(21) Application number: 20890552.1
(22) Date of filing: 16.11.2020
(51) Int. Cl.: H02K 15/02

(54) **PRODUCTION DEVICE FOR LAMINATED IRON CORE AND PRODUCTION METHOD THEREFOR**

(30) Priority: 19.11.2019 JP 2019208929
(71) Applicant: Tanaka Seimitsu Kogyo Co., Ltd., Toyama-shi, Toyama 939-2617 (JP)
(72) Inventor: KUROSAKI, Eiichi, Toyama-shi, Toyama 939-2617 (JP)
(74) Representative: Witte, Weller & Partner Patentanwälte mbB
(86) International application number: PCT/JP2020/042541
(87) International publication number: WO 2021/100637

(57) **Abstract**

The present invention provides an apparatus for producing a laminated steel core, which is capable of punching out steel core sheets having a predetermined shape from a thin steel strip while stably supporting the thin steel strip. The present invention also provides a method for producing a laminated steel core. A support 23a provided in a lower die 21 supports a thin steel strip 22 from its bottom and extends across the width of the thin steel strip and in the feed direction of the thin steel strip.

## Description

### TECHNICAL FIELD

The present invention relates to an apparatus and method for producing a laminated steel core.

### BACKGROUND ART

The present invention relates to an apparatus and method for producing a laminated steel core for a stator or a rotor of a rotating electric machine. In particular, the present invention relates to an apparatus and method for stacking and bonding steel core sheets having a predetermined shape that are punched out from a thin steel strip.

Laminated steel cores for rotating electric machines are generally manufactured from an electromagnetic steel hoop (thin steel strip) as a starting material by feeding the thin steel strip to a progressive die assembly. In the die assembly, the thin steel strip is subjected to progressive punching operation to create a predetermined shape, such as pilot holes, slots and inner teeth, thereby producing steel core sheets in a sequential manner. Then, a predetermined number of the steel core sheets are stacked on top of one another and bonded together to form a laminated steel core. The steel core sheets are conventionally assembled together by lamination interlocking, in which steel core sheets are provided with projections and recesses for interlocking, and stacked on top of one another and interlocked together under pressure. Alternatively, the steel core sheets are assembled together by lamination welding, in which steel core sheets are stacked on top of one another and welded together by laser. However, these lamination techniques suffer from the drawback of deterioration of the magnetic properties at the interlocking locations or the welded locations. Under these circumstances, lamination bonding has been widely proposed as an alternative technique, in which an adhesive is applied to the surface of a thin steel strip in a die assembly, and steel core sheets are punched out from the thin steel strip and are stacked on top of one another and bonded together to form a laminated steel core.

For example, Patent literature 1 discloses an apparatus for producing a laminated core, as illustrated in Figs. 13A and 13B attached to the specification. The apparatus comprises a main body 71 having an upper die 72 and a lower die 73. The upper die 72 is a movable die having a punch, and the lower die 73 is a fixed die having a die plate. The upper die 72 moves up and down by means of a hydraulic drive mechanism. A feed roll 75 for progressively feeding a thin steel strip 74 into the main body 71 is provided on the entry side of the main body 71. The main body 71 further comprises a punch mechanism 76 for punching a through hole in the steel strip 74 that defines a dimension other than the outer circumference of core sheets, an adhesive application mechanism 77 for applying an adhesive to the lower surface of the steel strip from which the core sheets are to be punched out, and a blanking punch mechanism 78 for punching a through hole in the steel strip 74 that defines the outer circumference of the core sheets. These mechanisms are arranged in this order in the direction of feeding of the steel strip 74.

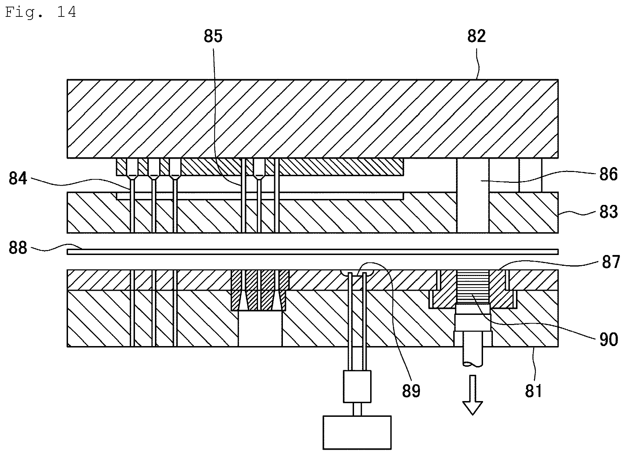

Patent literature 2 discloses a die assembly for producing a laminated steel core, as illustrated in Fig. 14 attached to the specification. The die assembly comprises a fixed die 81, a movable die 82, a die guide 83 which also serves as a stripper, a guide hole punch 84, a slot punch 85, a blanking punch 86, a die plate 87, and a local dispense/application device 89 for applying an adhesive to the lower surface of a metal strip 88 to be punched. The die assembly is capable of applying an adhesive to the lower surface of the metal strip before steel core pieces 90 are punched out from the metal strip.

Patent literature 3 discloses an apparatus for punching a thin strip, as illustrated in Figs. 15A to 15C attached to the specification. The punching apparatus 91 comprises a lower die 92 and an upper die 93 having a lift mechanism 95 capable of lifting the thin strip 94. A pair of guide rails 96, 97 is mounted on the upper surface of the lower die 92 and positioned at the opposite ends of the width of the thin strip 94 in such a manner that their cross-sections are each in an L-shape rotated 90 degrees to the left or right. The guide rails 96, 97 guide the thin strip 94 to the traveling direction of the thin strip 94. The lift mechanism 95 has a pair of elevating rods 98, 99 and a support rod 100. The support rod 100 is arranged horizontally under the thin strip 94 and extends across the entire width of the thin strip 94 to support it.

### CITATION LIST

### PATENT LITERATURE

Patent literature 1: JP 2009-72794 A
Patent literature 2: JP 2001-25218 A
Patent literature 3: JP 2016-120511 A

### SUMMARY OF INVENTION

### TECHNICAL PROBLEM

The apparatus for producing a laminated core as disclosed in Patent literature 1 has the problem that part of the steel strip 74 with low rigidity may droop after application of the adhesive and contact with the lower die 73.

The die assembly for producing a laminated steel core disclosed in Patent literature 2 lacks an element for supporting the metal strip 88 to be punched, and thus cannot operate stably.

The apparatus for punching a thin strip disclosed in Patent literature 3 ensures the support of the thin strip 94 across its entire width, but the thin strip 94 is not fully supported by the support element in the traveling direction of the thin strip 94, and thus the thin strip 94 is not stably supported.

The present invention relates to an improved apparatus and method to solve the above problems in the conventional art. An object of the present invention is to provide an apparatus for producing a laminated steel core, which is capable of punching out steel core sheets having a predetermined shape from a thin steel strip while stably supporting the thin steel strip. Another object of the present invention is to provide a method for producing a laminated steel core.

### SOLUTION TO PROBLEM

A first aspect of the invention of the present application for solving the problems is directed to an apparatus for producing a laminated steel core, comprising an adhesive application device and a die assembly having a support for supporting a thin steel strip from its bottom, wherein the apparatus is capable of applying an adhesive to the thin steel strip with the adhesive application device, punching out steel core sheets having a predetermined shape from the thin steel strip using the die assembly, and stacking the steel core sheets on top of one another.

A second aspect of the invention of the present application is directed to the apparatus for producing a laminated steel core according to the first aspect of the invention, wherein the support for supporting the thin steel strip from its bottom extends across the width of the thin steel strip and in the feed direction of the thin steel strip.

A third aspect of the invention of the present application is directed to the apparatus for producing a laminated steel core according to the first and second aspects of the invention, wherein the support has grooves extending in the feed direction of the thin steel strip, and the grooves are configured to help the support to support part of the thin steel strip on which the adhesive has not been applied.

A forth aspect of the invention of the present application is directed to the apparatus for producing a laminated steel core according to any one of the first to third aspects of the invention, wherein the punching of the thin steel strip is performed in multiple stages, wherein in each stage, the thin steel strip is supported by the support in the die assembly.

A fifth aspect of the invention of the present application is directed to the apparatus for producing a laminated steel core according to any one of the first to fourth aspects of the invention, wherein the support for supporting the thin steel strip is divided into multiple parts.

A sixth aspect of the invention of the present application is directed to the apparatus for producing a laminated steel core according to any one of the first to fifth aspects of the invention, wherein the adhesive application device is disposed at a location other than the die assembly.

A seventh aspect of the invention of the present application is directed to a method for producing a laminated steel core, comprising applying an adhesive to a thin steel strip with an adhesive application device, transferring the thin strip onto a support for supporting the thin steel strip from its bottom, punching out steel core sheets having a predetermined shape from the thin steel strip using a die assembly, and stacking the steel core sheets on top of one another.

### ADVANTAGEOUS EFFECTS OF INVENTION

The first, second and seventh aspects of the invention prevent part of the thin steel strip with low rigidity from drooping and contacting with the die assembly. The third aspect of the invention prevents the adhesive from sticking to the die assembly, and allows the adhesive application device to be disposed anywhere in the apparatus. The fourth aspect of the invention allows miniaturization of the die assembly. The fifth aspect of the invention allows placing of a support regardless of the equipment limitations of the die assembly. The sixth aspect of the invention makes it easy to carry out the maintenance of the adhesive application device.

### BRIEF DESCRIPTION OF DRAWINGS

Fig. 1 is a schematic configuration diagram showing an embodiment including an adhesive application device that can be used in the apparatus for producing a laminated steel core according to the present invention and other devices placed in-line before and after the adhesive application device.
Fig. 2 is an enlarged perspective view showing an embodiment including an adhesive application device that can be used in the apparatus for producing a laminated steel core according to the present invention and other devices placed in-line after the adhesive application device.
Fig. 3 is an enlarged cross-sectional front view showing an operating state of an embodiment of the adhesive application device that can be used in the apparatus for producing a laminated steel core according to the present invention.
Fig. 4 is an enlarged cross-sectional front view showing another operating state of an embodiment of the adhesive application device that can be used in the apparatus for producing a laminated steel core according to the present invention.
Fig. 5 is an enlarged cross-sectional front view showing another operating state of an embodiment of the adhesive application device that can be used in the apparatus for producing a laminated steel core according to the present invention.
Fig. 6 is a perspective view showing an embodiment of a lower die having a support for a thin steel strip according to the present invention.
Fig. 7 is a sectional view of Fig. 6, taken along the line VII-VII.
Fig. 8 is a sectional view of Fig. 6, taken along the line VIII-VIII.
Fig. 9 is a schematic sectional view showing an embodiment of the apparatus for producing a laminated steel core according to the present invention.
Fig. 10 is a schematic sectional view showing another embodiment of the apparatus for producing a laminated steel core according to the present invention.
Fig. 11 is a perspective view showing another embodiment of a lower die having a support for a thin steel strip according to the present invention.
Fig. 12 is a perspective view showing another embodiment of a lower die having a support for a thin steel strip according to the present invention.

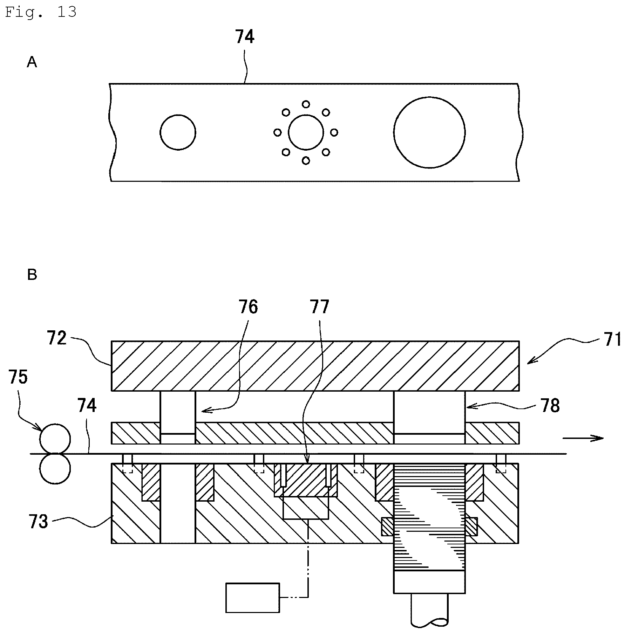

Figs. 13A and 13B are schematic views showing a prior art apparatus for producing a laminated core disclosed in Patent literature 1.
Fig. 14 is a sectional view showing a prior art die assembly for producing a laminated steel core disclosed in Patent literature 2.

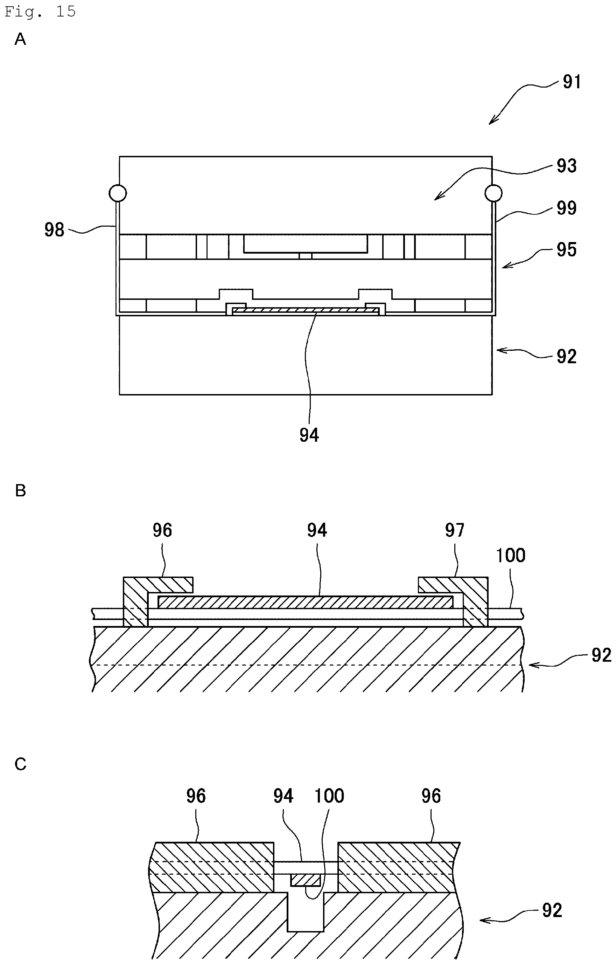

Figs. 15A, 15B and 15C are schematic views showing a prior art apparatus for punching a thin strip disclosed in Patent literature 3.

### DESCRIPTION OF EMBODIMENTS

Embodiments of the present invention will be described below with reference to the attached drawings. Various alterations and modifications are possible within the technical scope of the present invention.

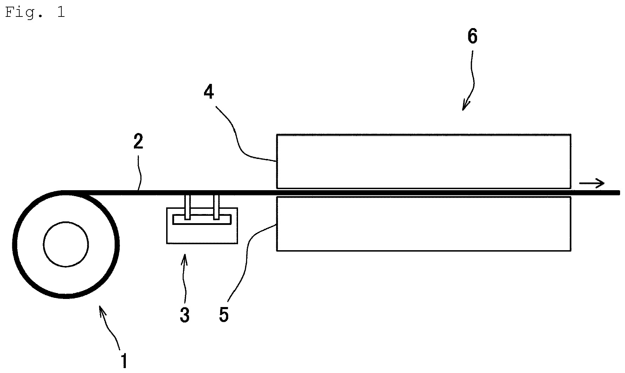

Fig. 1 is a schematic configuration diagram showing an embodiment including an adhesive application device that can be used in the apparatus for producing a laminated steel core according to the present invention and other devices placed in-line before and after the adhesive application device. In the figure, the numeral 1 denotes a coil of a wound thin steel strip 2. The numeral 3 denotes the adhesive application device. The numeral 6 denotes a die assembly comprising an upper die 4 and a lower die 5. As shown in the figure, the adhesive application device 3 is located immediately before the die assembly 6. The thin steel strip 2 is drawn from the coil 1, and an adhesive is applied to the lower surface of the thin steel strip 2 with the adhesive application device 3. The thin steel strip 2 is then punched to a predetermined shape in the die assembly 6, and transferred in the direction indicated by the arrow.

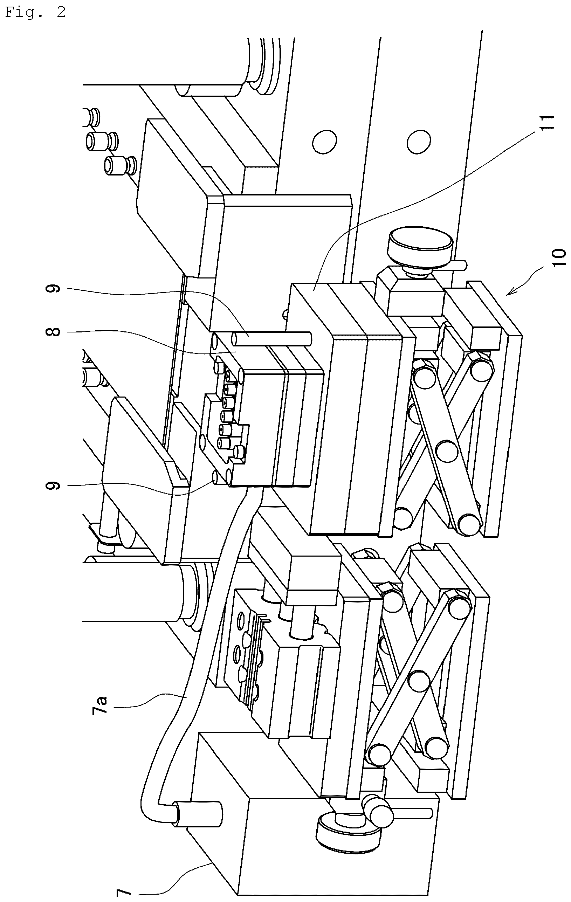

Fig. 2 is an enlarged perspective view of an embodiment including an adhesive application device that can be used in the apparatus for producing a laminated steel core according to the present invention and other devices placed in-line after the adhesive application device. In the figure, the numeral 7 denotes a tank for storing the adhesive. The adhesive is constantly supplied at a predetermined pressure through a hose 7a to an adhesive dispense unit having dispense nozzles for dispensing the adhesive (described later) . The numeral 8 denotes an adhesive container that accommodates the adhesive dispense unit. The numeral 9 denotes lift pins capable of raising and lowering the thin steel strip 2 (a means capable of raising and lowering only the thin steel strip without raising or lowering the adhesive container). The numeral 10 denotes a first elevating device. The numeral 11 denotes a rectangular container that holds a slide block unit inside.

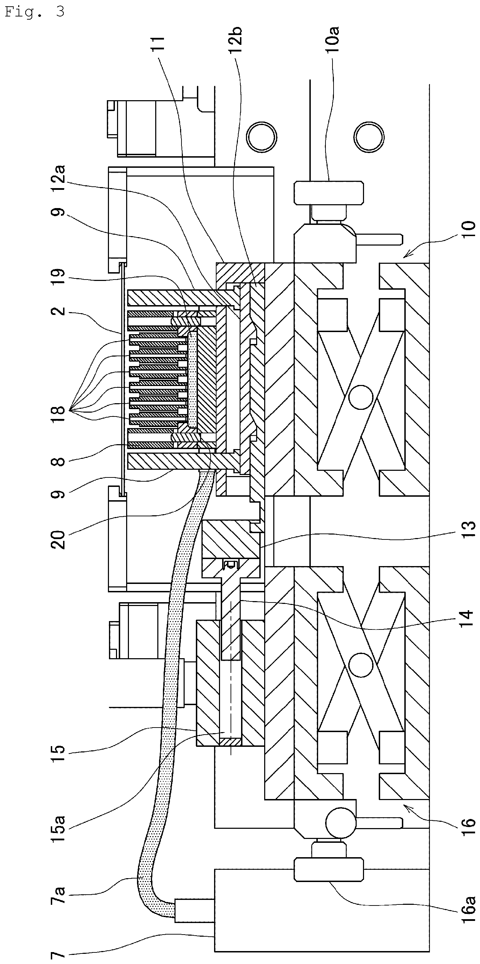

Fig. 3 is an enlarged cross-sectional front view showing an operating state of an embodiment of the adhesive application device that can be used in the apparatus for producing a laminated steel core according to the present invention. The adhesive container 8, the lift pins 9 and the rectangular container 11 can be raised and lowered by rotating a knob 10a of the first elevating device 10, as shown in Fig. 3. The slide block unit held in the rectangular container 11 comprises a first slide block 12a positioned on the upper side of the slide block unit and a second slide block 12b positioned on the lower side of the slide block unit. The second slide block 12b positioned on the lower side of the slide block unit is connected to a slide piece 13, which is connected to a rod 14. The rod 14 can be advanced and retracted in a cylinder 15. The advancement and retraction of the rod 14 in the cylinder 15 can be achieved by supplying compressed air at an appropriate pressure from a pneumatic pressure source to an opening 15a or supplying a pressure oil at an appropriate pressure from a hydraulic pressure source to the opening 15a. The numeral 16 denotes a second elevating device for raising and lowering the cylinder 15 to align the vertical position of the lower surface of the cylinder 15 and the lower surface of the second slide block 12b. The alignment of the vertical position of the lower surface of the cylinder 15 and the lower surface of the second slide block 12b can be achieved by raising or lowering the cylinder 15 by rotating the knob 16a.

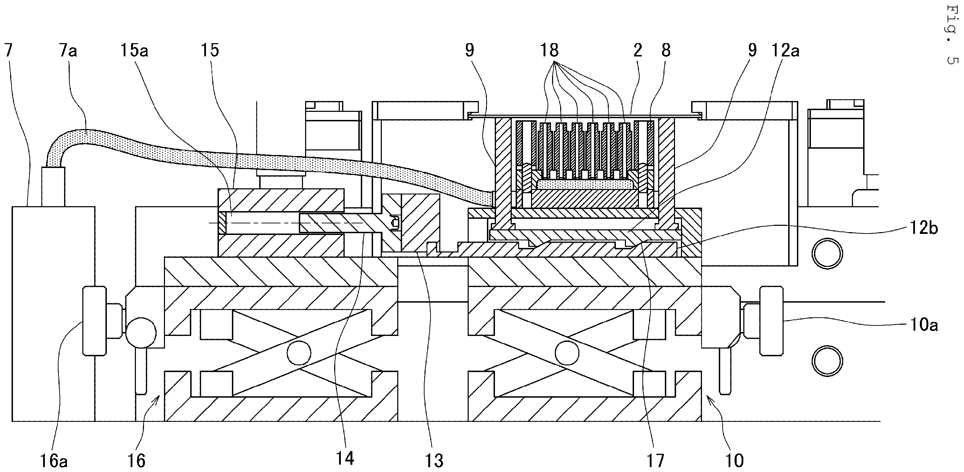

Referring to Fig. 5, when the rod 14 is advanced in the cylinder 15 to pull the second slide block 12b to the left-hand side in the figure, the first slide block 12a ascends a slope 17, on which the first slide block 12a is in contact with the second slide block 12b. As a result, the lift pins 9 supported by the first slide block 12a are raised to raise the thin steel strip 2. In this manner, the lift pins 9 can raise and lower the position of the thin steel strip 2 without moving the position of the adhesive container 8.

Referring back to Fig. 3, the numeral 18 denotes dispense nozzles for dispensing the adhesive. The dispense nozzles 18 are disposed inside the adhesive container 8 to be spaced apart from the end face of the adhesive container 8 as shown in Figs. 3, 4 and 5. The adhesive dispense unit that accommodates the dispense nozzles 18 is fixed to the adhesive container 8. The number of the dispense nozzles 18 is six in this embodiment, but needless to say, is not limited thereto. The adhesive stored in the tank 7 can be supplied through the hose 7a to an adhesive pool 19 at a predetermined pressure, and can be stably dispensed from the six dispense nozzles 18 in an equal quantity. The six dispense nozzles 18 communicate with the adhesive pool 19. The numeral 20 denotes an electric heater for heating the adhesive to a predetermined temperature. The electric heater is connected with a power source (not shown) and is disposed in the inner periphery of the adhesive container 8 so as to surround the dispense nozzles 18. By heating the adhesive with the electric heater 20, the fluidity of the adhesive in the adhesive container 8 can be enhanced and the adhesive can be stably dispensed from the dispense nozzles 18. Since the adhesive container 8 is located outside the die assembly 6, the temperature rise by the electric heater 20 has no influence on the die assembly, and simultaneously, temperature changes in the die assembly have no influence on the fluidity of the adhesive.

A method for applying an adhesive to a thin steel strip using the adhesive application device configured as described above will be described below.

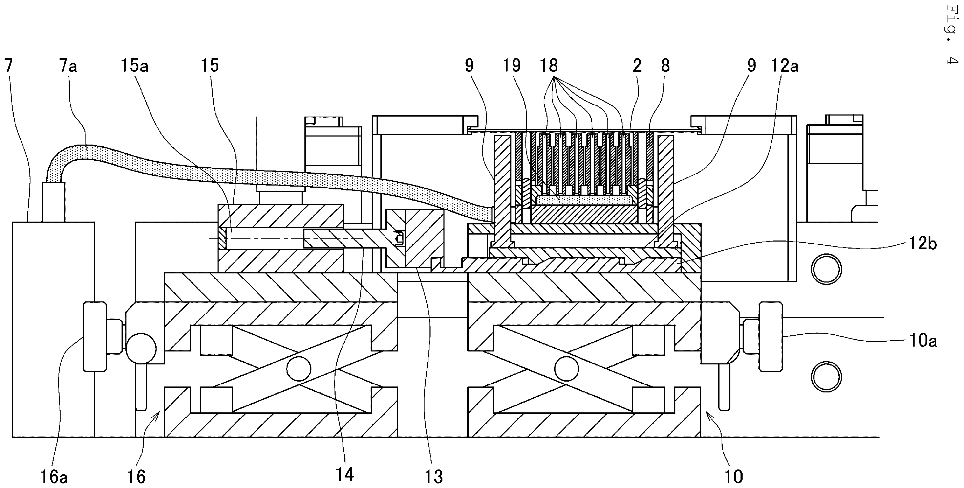

The adhesive is not continuously applied to the thin steel strip 2, but is rather applied to the thin steel strip 2 in synchronization with the timing of punching of the thin steel strip 2 to a predetermined shape by lowering the upper die 4 toward the lower die 5 in the configuration as shown Fig. 1. In particular, when referring to Fig. 3, at the timing when punching is not performed, a predetermined distance (about several millimeters) is provided between the thin steel strip 2 and the top surface of the adhesive container 8, which is at the same height as the tops of the lift pins 9. In the configuration shown in Fig. 1, at the timing when the upper die 4 is lowered toward the lower die 5 to punch the thin steel strip 2 to a predetermined shape, the thin steel strip 2 is pressed against the lower die 5, and the lower surface of the thin steel strip 2 is brought into abutment with the top surface of the adhesive container 8, as shown in Fig. 4. The adhesive stored in the tank 7 is supplied through the hose 7a to adhesive pool 19 at a predetermined pressure, and is constantly dispensed from the dispense nozzles 18. The vertical distance between the top surface of the adhesive container 8 and the tips of dispense nozzles 18 is kept constant, and at the time of the punching, the distance between the tips of the dispense nozzles 18 and the lower surface of the thin steel strip 2 that is brought into abutment with the top surface of the adhesive container 8 is also kept constant. Due to this configuration, the amount of the adhesive that rises on the dispense nozzles 18 is substantially constant. In this manner, a substantially constant amount of the adhesive is applied to the lower surface of the thin steel strip 2.

After the adhesive is applied to the lower surface of the thin steel strip 2 as described above, the thin steel strip 2 is punched to a predetermined shape to produce steel core sheets. The steel core sheets are stacked on top of one another within the lower die 5. After the stacked steel core sheets reach a predetermined number, the stacked steel core sheets are dispensed from the lower die 5 to give a laminated steel core. The laminated steel core dispensed from the lower die 5 is subjected to a given post treatment such as heating, and used for the assembly of electric parts. In this embodiment, the adhesive is applied to the lower surface of the thin steel strip 2, and therefore care should be taken to prevent the adhesive from being applied to the steel core sheet to be positioned at the bottom of the stacked steel core sheets of a predetermined number in each lot dispensed from the lower die 5. Accordingly, in order to prevent the adhesive from being applied to the first steel core sheet produced by punching in each lot, the configuration as shown in Fig. 5 is employed, in which when the rod 14 is advanced in the cylinder 15 to pull the second slide block 12b to the left-hand side in the figure, the first slide block 12a ascends the slope 17, on which the first slide block 12a is in contact with the second slide block 12b. As a result, the lift pins 9 supported by the first slide block 12a are raised to raise the thin steel strip 2. Consequently, the distance between the lower surface of the thin steel strip 2 and the tips of the dispense nozzles 18 becomes greater than that shown in Fig. 4, and the adhesive that rises on the dispense nozzles 18 is prevented from being applied to the lower surface of the thin steel strip 2. In this configuration, all that is necessary is to move the lower surface of the thin steel strip 2 away from the tips of dispense nozzles 18, and therefore the degree of elevation of the lift pins 9 does not need to be highly accurately adjusted.

In order to ensure that the adhesive is applied to the lower surface of the steel core sheets except for the first steel core sheet to be positioned at the bottom of the stacked steel core sheets in each lot, immediately after part of the thin steel strip 2 from which the first steel core sheet is to be punched out in each lot is passed through the adhesive application device 3, the rod 14 is moved to the right-hand side in the figure so as to retract from the cylinder 15. The second slide block 12b is then pushed by the rod 14 to the right-hand side in the figure, and the first slide block 12a descends the slope 17, on which the first slide block 12a is in contact with the second slide block 12b. As a result, the adhesive application device is returned to the original position where the distance between the thin steel strip 2 and the top surface of the adhesive container 8, which is at the same height as the tops of lift pins 9, is set at a predetermined distance, as shown in Fig. 3.

Before the punching of the thin steel strip 2, the knob 10a is rotated to raise or lower the adhesive container 8 together with the lift pins 9 and the rectangular container 11 by an appropriate distance, so that the lower surface of the thin steel strip 2 is brought into abutment with the top surface of the adhesive container 8 as shown in Fig. 4 to successfully apply the adhesive dispensed from the dispense nozzles 18 to the lower surface of the thin steel strip 2 in synchronization with the timing of punching of the thin steel strip 2. In place of the first elevating device 10, a height adjustment plate can also be used to raise or lower the adhesive container 8 together with the lift pins 9 and the rectangular container 11 by an appropriate distance.

In order to prevent the adhesive from being applied to the first steel core sheet produced by punching in each lot of the steel core sheets to be dispensed from the lower die 5, the lift pins 9 are raised to raise the thin steel strip 2 as shown in Fig. 5, thereby preventing the adhesive that rises on the dispense nozzles 18 from being applied to the lower surface of the thin steel strip 2. Accordingly, to successfully perform this movement, the knob 16a is rotated to raise or lower the cylinder 15 to align the vertical position of the lower surface of the cylinder 15 and the lower surface of the second slide block 12b, and then punching is performed.

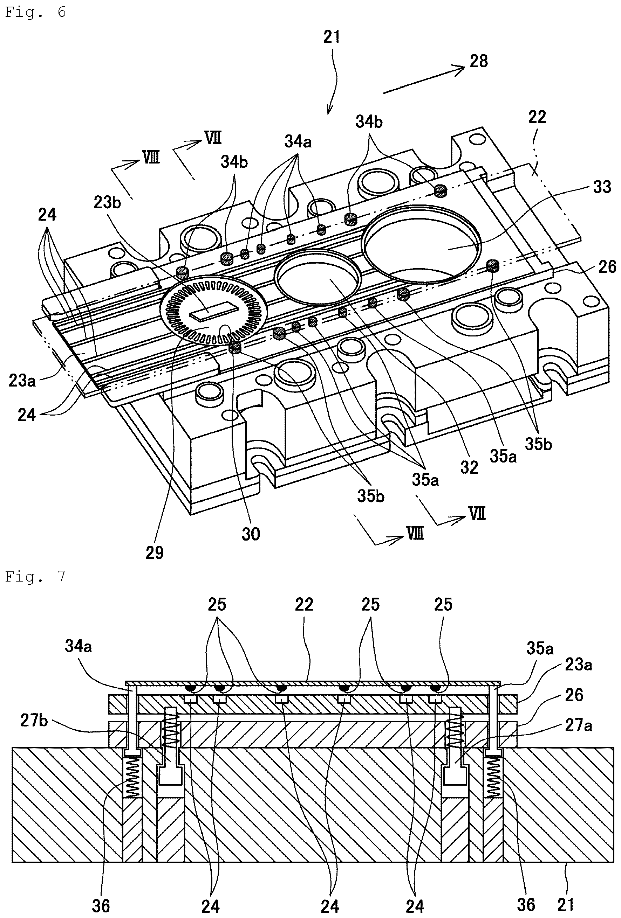

The adhesive is applied to the lower surface of the thin steel strip 2 in the manner as described above. In order to ensure the success of stacking of the steel core sheets punched from the thin steel strip 2, the thin steel strip 2 to which the adhesive has been applied should be prevented from drooping and contacting with the lower die during traveling through the die assembly so that the thin steel strip 2 will not be deformed, or the applied adhesive should be prevented from sticking to the die assembly. Accordingly, the vertical position of the thin steel strip 2 must be maintained at a height where the thin steel strip 2 does not contact with the lower die. To this end, the lower die provided with a support for supporting the thin steel strip as illustrated in Fig. 6 is employed and operates effectively. As shown in the figure, the lower die 21 is provided with a support 23a extending across the width of a thin steel strip 22 and in the feed direction of the thin steel strip 22. The support 23a is capable of supporting the thin steel strip 22 from its bottom. The support 23a has grooves 24 extending in the feed direction of the thin steel strip 22.

Fig. 7 is a sectional view of Fig. 6, taken along the line VII-VII. Fig. 7 shows the grooves 24, which are rectangular shaped depressions. The grooves 24 receive an adhesive 25 applied to the lower surface of the thin steel strip 22. The support 23a is mounted on the lower die 21 and supported by spring-loaded bolts 27a, 27b, which penetrate through a die plate 26 mounted on the lower die 21. The spring-loaded bolts 27a, 27b are arranged on the lower die 21 at appropriate intervals in the feed direction of the thin steel strip 22 (in the direction orthogonal to the plane of Fig. 7). The support 23a is held by the spring-loaded bolts 27a, 27b, and is thus not elevated above the height as shown in Fig. 7. At the time of punching, the support 23a is lowered together with the thin steel strip 22. The support 23a then returns to the initial height due to the elastic force of the spring-loaded bolts 27a, 27b. In this manner, the support 23a is maintained at the height as shown in Fig. 7 during the feeding of the thin steel strip 22.

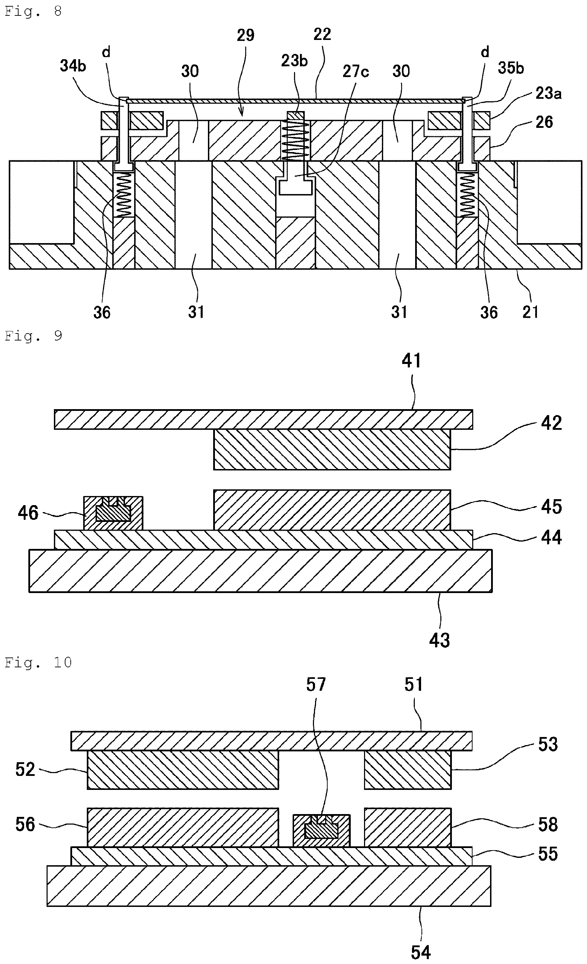

The support 23a capable of supporting the thin steel strip 22 from its bottom extends across the width of the thin steel strip 22 and in the feed direction of the thin steel strip 22, as described above. In addition to the support 23a, the lower die 21 is further provided with an auxiliary support 23b for supporting the thin steel strip 22 at the middle of its width, as shown in Fig. 6. Fig. 8 is a sectional view of Fig. 6, taken along the line VIII-VIII. As seen in Fig. 8, the auxiliary support 23b is supported by a spring-loaded bolt 27c disposed on the lower die 21. The auxiliary support 23b is held by the spring-loaded bolt 27c, and is thus not elevated above the height as shown in Fig. 8. At the time of punching, the auxiliary support 23b is lowered together with the thin steel strip 22. The auxiliary support 23b then returns to the initial height due to the elastic force of the spring-loaded bolt 27c. In this manner, the auxiliary support 23b is maintained at the height as shown in Fig. 8.

Referring back to Fig. 6, the thin steel strip 22 is fed in the direction 28 indicated by the arrow. The adhesive 25 is applied to the lower surface of the thin steel strip 22 before the thin steel strip 22 reaches the lower die 21. The thin steel strip 22 is punched against the lower die 21 in accordance with the operations described later.

Referring to Fig. 8, the support 23a has a circular opening 29. The die plate 26 has a large number of openings 30 arranged in an annular manner at appropriate intervals. The lower die 21 also has a large number of openings 31 arranged in an annular manner, and each of the openings 31 is positioned immediately below the corresponding opening 30. Referring back to Fig. 6, the support 23a, the die plate 26 and the lower die 21 are each provided with a circular opening 32 with a diameter smaller than that of the opening 29 and a circular opening 33 with a diameter larger than that of the opening 29.

The upper die (not shown) moves down to the lower die 21 to engage the thin steel strip 22 to create a large number of slits arranged in an annular manner, as seen in Fig. 6. The slits have a shape corresponding to that of the large number of openings 30 arranged on the die plate in an annular manner at appropriate intervals. After punching the slits, a circular hole having a shape corresponding to that of the circular opening 32 is punched in the thin steel strip 22. Finally, a circular hole having a shape corresponding to that of the circular opening 33 is punched in the thin steel strip 22. Guide pins 34a, 35a are provided for holding the thin steel strip 22 at a height where the thin steel strip 22 is prevent from contacting the lower die during the feeding of the thin steel strip 22. Guide pins 34b and 35b are provided for restraining the movement of the thin steel strip 22 in the width direction. The tips of the guide pins 34a, 35a are in contact with the lower surface of the thin steel strip 22 as shown in Fig. 7. The guide pins 34b, 35b have a groove d for receiving the width ends of the thin steel strip 22 as shown in Fig. 8. A large number of the guide pins 34a, 34b, 35a, and 35b are arranged along the feed direction of the thin steel strip 22. The guide pins 34a, 34b, 35a, and 35b are supported by springs 36 having the same function as that of the spring-loaded bolts 27a, 27b, and 27c, as seen in Figs. 7 and 8, and act to maintain the vertical position of the thin steel strip 22 during the feeding of the thin steel strip 22. Conventional apparatuses for producing a laminated steel core are also provided with guide pins similar to the guide pins 34a, 34b, 35a, and 35b. The guide pins 34a, 34b, 35a, and 35b according to the present invention are capable of holding the thin steel strip 22 at a higher level than that of the upper surface of the support 23a. Due to this configuration, the support 23a supports the thin steel strip 22 by preventing the thin steel strip 22 from drooping, and facilitates smooth feeding of the thin steel strip 22 by preventing sticking of the thin steel strip 22 to the support 23a due to working oil from occurring and causing resistance to movement of the thin steel strip 22.

Fig. 9 is a schematic sectional view showing an embodiment of the apparatus for producing a laminated steel core according to the present invention. An upper die 42 is supported by a mounting plate 41. A lower die 45 and an adhesive application device 46 are supported by another mounting plate 44. The mounting plate 44 is supported by a mounting frame 43. The lower die 45 may be a lower die having the configuration as shown in Fig. 6. The adhesive application device 46 may be an adhesive application device having the configuration as shown in Figs. 1 to 5.

Fig. 10 is a schematic sectional view showing another embodiment of the apparatus for producing a laminated steel core according to the present invention. The apparatus has two pairs of upper and lower dies disposed before and after an adhesive application device. The upper dies 52, 53 are supported by a mounting plate 51. The lower dies 56, 58 and an adhesive application device 57 are supported by another mounting plate 55. The mounting plate 55 is supported by a mounting frame 54. The lower dies 56, 58 may be lower dies having the configuration as shown in Fig. 6. The adhesive application device 57 may be an adhesive application device having the configuration as shown in Figs. 1 to 5. A lower die having the configuration as shown in Fig. 6 may be divided as appropriate in the same way as with the lower dies 56, 58 as shown in Fig. 10. For example, the lower die 56 may be provided with openings corresponding to the openings 31 arranged in an annular manner shown in Fig. 8 and an opening corresponding to the circular opening 32 with a smaller diameter shown in Fig. 6. The lower die 58 may be provided with an opening corresponding to the circular opening 33 with a larger diameter shown in Fig. 6. Although not shown in Figs. 9 and 10, the lower dies 45, 56, and 58 may be provided with a die plate having the same configuration as that of the die plate 26 shown in Figs. 6, 7 and 8.

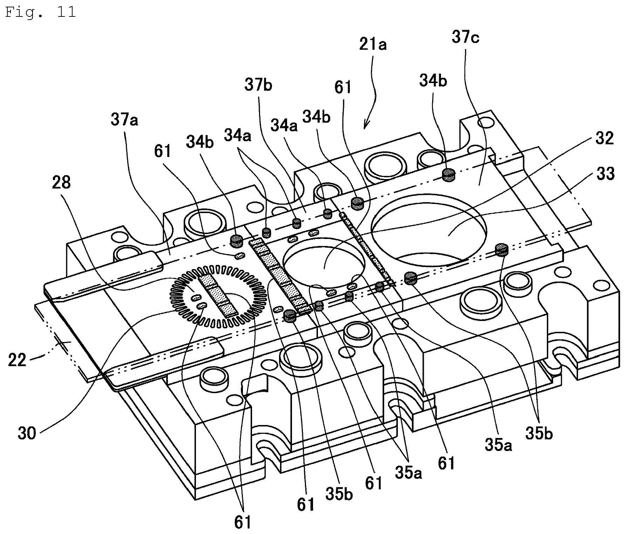

Fig. 11 is a perspective view showing another embodiment of the lower die having a support for a thin steel strip according to the present invention in a different configuration from that of Fig. 6. Three divided die plates 37a, 37b, and 37c are provided in the lower die in Fig. 11. As with the die plate of Fig. 6, the die plate 37a has a large number of openings 30 arranged in an annular manner at appropriate intervals. The lower die 21a has openings corresponding to the large number of openings 31 of Fig. 8 arranged in an annular manner, and the openings are positioned immediately below the openings 30. The die plate 37b and the lower die 21a are each provided with a circular opening 32 with a smaller diameter. The die plate 37c and the lower die 21a are also each provided with a circular opening 33 with a larger diameter. The thin steel strip 22 is supported by multiple supports 61 in this embodiment. The multiple supports 61 are arranged in positions where the multiple supports 61 do not come in contact with the adhesive applied to the lower surface of the thin steel strip 22. The multiple supports 61 are supported by springs having the same function as that of the spring-loaded bolts 27a, 27b, and 27c.

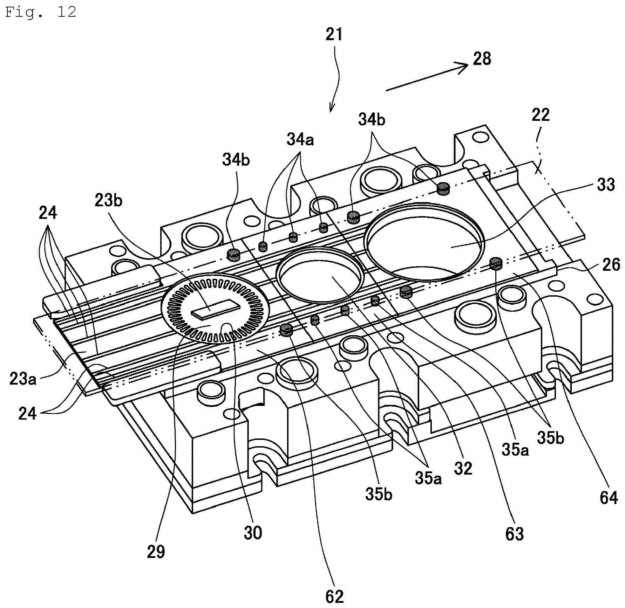

Fig. 12 is a perspective view showing another embodiment of the lower die having a support for a thin steel strip according to the present invention in a different configuration from that of Fig. 6. As illustrated in the figure, the support for supporting the thin steel strip 22 from its bottom extends across the width of the thin steel strip and in the feed direction of the thin steel strip and is divided into three parts 62, 63, and 64. The support composed of the three parts 62, 63, and 64 may have the same configuration as that of the support 23a shown in Fig. 6, except that the support is divided into three parts. In other words, the three parts 62, 63, and 64 of the support may be supported by springs disposed in the lower die (springs having the same function as that of the spring-loaded bolts 27a, 27b as shown in Fig. 7 or the spring-loaded bolt 27c as shown in Fig. 8). Such a divided support for supporting the thin steel strip is advantageous if there are equipment limitations causing some difficulties in disposing the support 23a extending across the width of the thin steel strip 22 and in the feed direction of the thin steel strip 22 to support the entire thin steel strip 22 from its bottom as shown in Fig. 6.

### INDUSTRIAL APPLICABILITY

The apparatus for producing a laminated steel core according to the present invention is applicable to the production of laminated steel cores for stepper motors or motor cores.

### REFERENCE SIGNS LIST

1 Coil
2 Thin steel strip
3, 46, 57 Adhesive application device
4, 42, 52, 53 Upper die
5, 45, 56, 58 Lower die
6 Die assembly
7 Tank
8 Adhesive container
9 Lift pins
10 First elevating device
10a Knob
11 Rectangular container
12a First slide block
12b Second slide block
13 Slide piece
14 Rod
15 Cylinder
15a Opening
16 Second elevating device
16a Knob
17 Slope
18 Dispense nozzles
19 Adhesive pool
20 Electric heater
21 Lower Die
22 Thin Steel Strip
23a, 61, 62, 63, 64 Supports
23b Auxiliary support
24 Grooves
25 Adhesive
26, 37a, 37b, 37c Die plates
27a, 27b, 27c Spring-loaded bolts
29 Circular opening
30 Openings
31 Openings arranged in an annular manner
32 Circular opening with a smaller diameter
33 Circular opening with a larger diameter
34a, 34b, 35a, 35b Guide pins
36 Springs
41, 44, 51, 55 Mounting plates
43, 54 Mounting frames

## Claims

1. An apparatus for producing a laminated steel core, comprising an adhesive application device and a die assembly having a support for supporting a thin steel strip from its bottom, wherein the apparatus is capable of applying an adhesive to the thin steel strip with the adhesive application device, punching out steel core sheets having a predetermined shape from the thin steel strip using the die assembly, and stacking the steel core sheets on top of one another.

2. The apparatus for producing a laminated steel core according to claim 1, wherein the support for supporting the thin steel strip from its bottom extends across the width of the thin steel strip and in the feed direction of the thin steel strip.

3. The apparatus for producing a laminated steel core according to claim 1 or 2, wherein the support has grooves extending in the feed direction of the thin steel strip, and the grooves are configured to help the support to support part of the thin steel strip on which the adhesive has not been applied.

4. The apparatus for producing a laminated steel core according to any one of claims 1 to 3, wherein the punching of the thin steel strip is performed in multiple stages, wherein in each stage, the thin steel strip is supported by the support in the die assembly.

5. The apparatus for producing a laminated steel core according to any one of claims 1 to 4, wherein the support for supporting the thin steel strip is divided into multiple parts.

6. The apparatus for producing a laminated steel core according to any one of claims 1 to 5, wherein the adhesive application device is disposed at a location other than the die assembly.

7. A method for producing a laminated steel core, comprising applying an adhesive to a thin steel strip with an adhesive application device, transferring the thin strip onto a support for supporting the thin steel strip from its bottom, punching out steel core sheets having a predetermined shape from the thin steel strip using a die assembly, and stacking the steel core sheets on top of one another.
